# EUROPÄISCHE PATENTSCHRIFT

(11) **EP 1 628 827 B1**
(45) Veröffentlichungstag und Bekanntmachung des Hinweises auf die Patenterteilung: **27.07.2011**
(21) Anmeldenummer: 04731171.7
(22) Anmeldetag: 05.05.2004
(51) Int. Cl.: B32B 27/08, C08J 7/04, C08L 51/00, C09D 151/00

(54) **MISCHUNGEN ENTHALTEND THERMOPLASTISCHES POLYURETHAN UND ASA**
MIXTURES CONTAINING THERMOPLASTIC POLYURETHANE AND ACRYLONITRILE-STYRENE-ACRYLIC ESTER COPOLYMER (ASA)
MELANGE CONTENANT DU POLYURETHANE THERMOPLASTIQUE ET LE COPOLYMERE ACRYLNITRILE-STYRENE-ESTER ACRYLIQUE (ASA)

(30) Priorität: 09.05.2003 DE 10321081
(43) Veröffentlichungstag der Anmeldung: 01.03.2006
(73) Patentinhaber: BASF SE, 67056 Ludwigshafen (DE)
(72) Erfinder: BREULMANN, Michael, 68199 Mannheim (DE); USLENGHI, Matteo, I-21040 Castronno Va (IT); MC KEE, Graham, Edmund, 67433 Neustadt (DE); UHLHORN, Frank, 49457 Drebber (DE); FRIEDERICHS, Stephan, 49088 Osnabrück (DE); BRAND, Johann, Diedrich, 49448 Lemförde (DE)
(86) Internationale Anmeldenummer: PCT/EP2004/004749
(87) Internationale Veröffentlichungsnummer: WO 2004/098878

(56) Entgegenhaltungen:
- EP-A- 1 050 549
- WO-A-00/22045
- DE-A- 4 211 415
- DE-A- 10 100 225
- WOODS: "The ICI Polyurethanes Book" 1987, JOHN WILEY&SONS/ICI , CHICESTER,UK 014728 , XP002298617 Seite 192, Zeile 37 - Seite 193, Zeile 5

## Beschreibung

Die Erfindung betrifft Mischungen (1) enthaltend zwischen 1 Gew.-% und 40 Gew.-%, bevorzugt zwischen 3 Gew.-% und 30 Gew.-%, besonders bevorzugt zwischen 5 Gew.-% und 25 Gew.-% (A) thermoplastisches Polyurethan basierend auf aliphatischem Isocyanat und zwischen 60 Gew.-% und 99 Gew.-%, bevorzugt zwischen 70 Gew.-% und 97 Gew.-%, besonders bevorzugt zwischen 75 Gew.-% und 95 Gew.-% (B) Acrylnitril-Styrol-Acrylester-Copolymer (ASA) und/oder Acrylnitril-Ethylenhomo oder Copolymer-Styrol (AES)-Werkstoff, bevorzugt Acrylnitril-Styrol-Acrylester-Copolymer (ASA), jeweils bezogen auf das Gesamtgewicht der Mischung (1), bevorzugt bezogen auf die Summe der Gewichte von (A) und (B) in der Mischung (1). Außerdem betrifft die Erfindung Materialien beschichtet bevorzugt mit einer Folie enthaltend eine Mischung (1) enthaltend zwischen 1 Gew.-% und 40 Gew.-%, bevorzugt zwischen 3 Gew.-% und 30 Gew.-%, besonders bevorzugt zwischen 5 Gew.-% und 25 Gew.-% (A) thermoplastisches Polyurethan basierend auf aliphatischem Isocyanat und zwischen 60 Gew.-% und 99 Gew.-%, bevorzugt zwischen 70 Gew.-% und 97 Gew.-%, besonders bevorzugt zwischen 75 Gew.-% und 95 Gew.-% (B) Acrylnitril-Styrol-Acrylester-Copolymer (ASA) und/oder Acrylnitril-Ethylenhomo oder Copolymer-Styrol (AES)-Werkstoff, bevorzugt Acrylnitril-Styrol-Acrylester-Copolymer (ASA), jeweils bezogen auf das Gesamtgewicht der Mischung (1), bevorzugt bezogen auf die Summe der Gewichte von (A) und (B) in der Mischung (1). Des weiteren bezieht sich die Erfindung auf Karosserieteile, insbesondere Dach, Heckklappe, Kotflügel, Türen, Kofferraumdeckel, Motorklappe von Automobilen oder Lastkraftwagen, utility vehicle, Rasenmäher, Traktoren jeglicher Größe, Motorrad, Schneemobil, jet ski; Booten, Reisemobilen, bevorzugt Automobilen und/oder Holz, z.B. Massivholz oder Spanplatten, bevorzugt Möbel oder Materialien zum Hausbau wie z.B. Hauswände, Fensterrahmen, Balken, beschichtet bevorzugt in Form einer Folie bevorzugt auf der sichtbaren Oberfläche mit einer Mischung (1) enthaltend (A) thermoplastisches Polyurethan basierend auf aliphatischem Isocyanat und (B) Acrylnitril-Styrol-Acrylester-Copolymer (ASA) und/oder Acrylnitril-Ethylenhomo oder -copolymer-Styrol (AES) - Werkstoff, bevorzugt Acrylnitril-Styrol-Acrylester-Copolymer (ASA) Werkstoff. Des weiteren bezieht sich die Erfindung auf Verfahren zur Herstellung von Karosserieteile und/oder Holz beschichtet mit der erfindungsgemäßen Mischung enthaltend (A) thermoplastisches Polyurethan (TPU) basierend auf aliphatischem Isocyanat und (B) Acrylnitril-Styrol-Acrylester-Copolymer (ASA) und/oder Acrylnitril-Ethylenhomo oder -copolymer-Styrol (AES)-Werkstoff.

Folien auf Basis von ASA sind schon seit langem Stand der Technik. Folien auf Basis von ASA zeichnen sich durch eine außergewöhnliche Witterungsbeständigkeit und hervorragende mechanische Eigenschaften aus. Diese Eigenschaftskombination hat dazu beigetragen, dass Folien auf Basis von ASA ein breites Einsatzgebiet im Bereich von Beschichtungen von verschiedensten Werkstoffen wie zum Beispiel Holz, Metall, Kunststoff, etc. insbesondere in Außenanwendungen gefunden haben bei denen eine Beeinträchtigung des Erscheinungsbildes nicht akzeptabel ist. Die Beschichtung von Oberflächen mit Folien kann nach verschiedensten Methoden erfolgen wie z.B. Tiefziehverfahren, Sinterverfahren, Vakuumformen etc. Eine Schwäche dieses außergewöhnlichen Werkstoffs ASA liegt jedoch in einer relativ geringen Reißdehnung. Diese Eigenschaft kann sich insbesondere bei Beschichtungen von Werkstoffen nachteilig auswirken, die eine besonders ausgeprägte Oberflächenstrukturierung wie z.B. scharfe Kanten, Ecken oder Erhebungen aufweisen und darüber hinaus unter wechselnden Umwelteinflüssen ihre Dimension verändern können. Hier sei z.B. Holz genannt, dass je nach Witterung signifikante Mengen an Wasser aufnehmen kann. Durch diese Art der Quellung kann Holz das Volumen mehr als verdoppeln. Durch so eine Veränderung des Volumen des mit ASA beschichteten Werkstoffes, kann es aufgrund der mangelnden Reißdehnung der Beschichtungsfolie auf Basis von ASA zur Ausbildung von Rissen in der Beschichtung insbesondere an Ecken und Kanten von stark oberflächenstrukturierten Formteilen kommen.

Der vorliegenden Erfindung lag die Aufgabe zugrunde Kunststoffmaterialien, bevorzugt in Form von Folien zur Beschichtung von Materialien, besonders bevorzugt für Beschichtungen insbesondere für Holz oder Karosserieteile bereitzustellen, die über hervorragende Witterungseigenschaften und Kratzbeständigkeiten verfügen, die sehr gut zu Folien verarbeitbar sind, die zur Beschichtung von verschiedensten Materialien geeignet sind, wobei die Reißdehnung/Bruchdehnung insbesondere bei hervorragender Lichtechtheit signifikant verbessert werden sollte.

Diese Aufgabe konnte erfindungsgemäß durch die eingangs beschriebenen Mischungen (1) gelöst werden, die bevorzugt zur Beschichtung von Materialien insbesondere für beschichtete Karosserieteile und/oder Holz eingesetzt werden. Mischungen aus thermoplastischen Polyurethanen, im Folgenden auch als TPU bezeichnet, sowie Acrylnitril-Styrol-Acrylester-Copolymeren, im folgenden auch als ASA bezeichnet, sind unter anderem aus EP-B 1 121 392, DD-A 301 057, DE-A 2 854 407, DE-A 4 211 415 und DE-A 3 938 817 allgemein bekannt. EP-A 475 220 beschreibt Folien, die aus einer Mischung aus TPU, ASA und einem thermoplastischen Harz bestehen und eine sehr gute Eigenstandfestigkeit, sehr gute Licht-, Wärme- und Chemikalienbeständigkeit sowie keine Ausgasungen aufweisen sollen. Überraschenderweise wurde gefunden, dass die erfindungsgemäße Mischung aus ASA und aliphatischem TPU sich prozesssicher herstellen und zu Folien verarbeiten lässt, wobei sich diese Mischung durch die ausgezeichneten mechanischen Eigenschaften und Witterungsbeständigkeiten von ASA auszeichnet und darüber hinaus eine Reißdehnung aufweist, die weit über der des reinen ASAs liegt und sich somit ausgezeichnet zur Beschichtung solcher Werkstoffe eignet, die eine ausgeprägte Oberflächenstrukturierung aufweisen und unter Witterungseinflüssen ihre Dimensionen verändern können.

Das Acrylnitril-Styrol-Acrylester-Copolymer (B) basiert bevorzugt auf:
(B1) 10 bis 90 Gew.-% mindestens einem Propfkautschuk basierend auf
(B11) 50 bis 95 Gew.-% einer Propfgrundlage hergestellt mit
(B111) 70 bis 99,9 Gew.-% mindestens einem Acrylsäurealkylester
(B112) 0,1 bis 30 Gew.-% mindestens einem mindestens bifunktionellen Vernetzer,
(B113) 0 bis 29,9 Gew.-% mindestens einem weiteren copolymerisierbaren Monomeren,
(B12) 5 bis 50 Gew.-% einer Propfhülle auf der Basis von
(B121) 65 bis 90 Gew.-%, bevorzugt 70 bis 80 Gew.-% mindestens einem vinylaromatischen Monomeren,
(B122) 10 bis 35 Gew.-%, bevorzugt 20 bis 30 Gew.-% mindestens einem polaren, copolymerisierbaren ungesättigten Monomeren, bevorzugt Acrylnitril und/oder Methacrylnitril,
(B123) 0 bis 25 Gew.-% mindestens einem weiteren copolymerisierbaren Comonomer,
(B2) 10 bis 90 Gew.-% mindestens einem Copolymeren hergestellt mit der Komponenten
(B21) 60 bis 85 Gew.-% mindestens einem vinylaromatischen Monomeren,
(B22) 15 bis 40 Gew.-% mindestens einem polaren, copolymerisierbaren ungesättig ten Monomeren,
(B23) 0 bis 9 Gew.-% mindestens einem Comonomeren,
wobei sich die Gewichtsangaben zu (B1) und (B2) auf das Gewicht von (B), die Gewichtsangaben zu (B11 und B12) auf das Gewicht von (B1), die Gewichtsangaben zu (B111), (B112) und (B113) auf das Gewicht der Komponente (B11), (B121), (B122) und (B123) auf das Gewicht von (B12) und die Gewichtsangaben von (B21), (B22) und (B23) auf das Gewicht von (B2) bezogen sind.

AES Werkstoffen bestehen aus einem Matrix aus Polystyrol und Acrylnitril und gegebenenfalls andere Monomeren. Hinsichtlich der obigen Angaben zu der bevorzugten Komponente B unterscheiden sich AES Werkstoffe von ASA Werkstoffen in der Komponente B11, die im Falle der AES Werkstoffe auf Ethylenhomo- oder Copolymeren basieren kann. Als Kopolymere kommen beispielsweise C₃- bis C₂₀-alpha-Olefine, bevorzugt C₃- bis C₈-alpha-Olefine in Frage. AES- Kunststoffe sind ausführlich in geeigneter Zusammensetzung sowie bezüglich ihrer Herstellverfahren beschrieben im Handbuch der Technischen Polymerchemie, VCH Verlag, 1993, insbesondere Seite 490.

Als erfindungsgemäß beschichtete Materialien kommen allgemein bekannte Werkstoffe in Frage, beispielsweise Metalle, beispielsweise Eisen, Stahl, Aluminium, Kupfer, Zinn, bevorzugt Stahl, Eisen und/oder Aluminium, Kunststoffe, beispielsweise Carbonfaser, Polystyrol, Polyurethane, Styrolcopolymere, PVC, die gegebenenfalls geschäumt und/oder mit Glasfern verstärkt sein können, Holzwerkstoffe, beispielsweise Massivholz oder Spanplatten, jeweils auf der Basis bekannter Holzarten, beispielsweise Harthölzem und/oder Weichhölzem, Kunststoff-Holz-Verbunde, Kunststoff-Naturfaser-Verbunde oder sonstige Materialien auf der Basis natürlicher Werkstoffe wie z.B. Naturfasern.

Beispielsweise kommen als beschichtete Materialien folgende Produkte in Betracht: alle bekannten flächigen oder kompakten Gegenstände und Einzelteile eines Automobils, Busses, Lastkraftwagens, Motorrads, Fahrrads, Flugzeugs, Schiffs, elektrischen oder elektronischen Geräts, Hausgeräts, Spielzeugs, Möbel, beispielsweise Karosserieteile, Abdeckungen, Griffe, Verkleidungen, tragende Teile, Dächer, Fußboden, Türen, Solaranlagen, elektronische oder elektrische Geräte jeglicher Art, Antennenanlagen, Telekommunikationsanlagen, Klimaanlagen. Produkte, die in Frage kommen, sind beispielsweise in der WO 00/61664 auf der Seite 15 beschrieben.

Die erfindungsgemäß beschichteten Materialien, insbesondere die Karosserieteile und/oder Holz können bevorzugt derart hergestellt werden, dass man die erfindungsgemäße Mischung (1) zu einer Folie extrudiert und die Folie mittels Tiefziehverfahren, Sinterverfahren, laminieren und/oder Vakuumformen auf der zu beschichtenden Oberfläche appliziert oder mittels Kalandrierung, Spritzguss oder einer bekannten Laminierungstechnologie die Beschichtung vornimmt. Die Folie enthaltend die Mischung (1) weist bevorzugt eine Dicke zwischen 0,01 mm und 2,5 mm, besonders bevorzugt 0,04 mm bis 0,5 mm auf. Die Herstellung einer Folie mittels Extrusion und/oder den anderen, oben bereits dargestellten Verfahren ist allgemein bekannt und in der Literatur ausführlich beschreiben. Bevorzugt wird die Folie mittels des allgemein bekannten Tiefziehverfahrens, Sinterverfahrens, Vakuumformen und/oder durch laminieren auf die zu beschichtenden, Materialien, d.h. die zu beschichtende Oberfläche, insbesondere die Holzoberfläche aufgetragen. Bei den erfindungsgemäß besondere bevorzugten Karosserieteile, insbesondere Dach, Heckklappe, Kotflügel, Türen, Kofferraumdeckel, Motorklappe von Automobilen oder Lastkraftwagen, kann es sich um einen Träger auf der Basis bekannter Metalle, z.B. Stahl, Aluminium, Eisen, und/oder Kunststoffe, die gegebenenfalls geschäumt und/oder mit Glasfern verstärkt sein können, handeln, die mit der Folie beschichtet werden. Bevorzugt sind für die Karosserieteile Kunststoffe als Träger, die mit der Folie enthaltend Mischung (1) beschichtet werden. Bevorzugt sind somit auch Karosserieteile, bei denen das Karosserieteil einen Träger auf der Basis von Kunststoff aufweist, der mit einer Folie enthaltend die Mischung (1) beschichtet ist. Im Falle der Karosserieteile kann die Beschichtung des Trägers mit der Folie beispielsweise mit den bereits beschriebenen Verfahren erfolgen, die in der Literatur ausführlich beschrieben sind.

Die erfindungsgemäße Folie enthaltend die Mischung (1) kann gefärbt sein. Außerdem ist es möglich, die mit der Folie beschichteten Karosserie- oder Holzteile zu lackieren, beispielsweise mit allgemein bekannten Lacken, nach allgemein bekannten Verfahren. Die erfindungsgemäße Mischung (1), bevorzugt die Folie enthaltend die erfindungsgemäße Mischung (1) weist bevorzugt eine Reißdehnung nach ISO 527/3 (bevorzugt 1000 Stunden Xenon 1200 cps ISO 4892-2A), bevorzugt vor und nach Bewitterung, von > 20 % auf. Die erfindungsgemäße Mischung (1), bevorzugt die Folie enthaltend die erfindungsgemäße Mischung (1) weist bevorzugt eine Änderung des Yelloness dE total color difference (Gesamte Farbe Abstand) nach DIN 6174 nach 1000 Stunden im Xenotest 1200 cps nach ISO 4892-2A von < 6 auf, bei nicht- brillianten Farben inklusive Pastell besonders bevorzugt < 4, bei bunten Farben bevorzugt <6 auf.

Zu den in den erfindungemäßen Mischungen enthaltenen Komponenten kann weiterhin folgendes ausgeführt werden:

Als TPU (A) können in den erfindungsgemäßen Mischungen allgemein übliche TPU auf der Basis aliphatischer Isocyanate verwendet werden, die nach bekannten Verfahren durch Umsetzung von (a) Isocyanaten mit (b) gegenüber Isocyanaten reaktiven Verbindungen und gegebenenfalls (c) Kettenverlängerungsmitteln in Gegenwart von gegebenenfalls (d) Katalysatoren und/oder (e) Hilfs- und/oder Zusatzstoffen hergestellt werden können, wobei das Verhältnis der Isocyanatgruppen der Komponente (a) zur Summe der gegenüber den Isocyanaten reaktiven Gruppen der Komponenten (b) und gegebenenfalls (c) üblicherweise 1:0,9 bis 1:1,1 beträgt.
a) Als Isocyanate (a) kommen erfindungsgemäß aliphatische und/oder cycloaliphatische Diisocyanate in Betracht Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4- und/oder 1,3-Bis(isocyanatomethyl)cyclohexan (HXDI), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethandiisocyanat sowie die entsprechenden Isomerengemische. Besonders bevorzugt ist Hexamethylen-diisocyanat-1,6 (HDI).
b) Als gegenüber Isocyanaten reaktive Substanzen (b) eignen sich beispielsweise Polyhydroxylverbindungen mit Molekulargewichten von 500 bis 8000, vorzugsweise bekannte Polyetherole und/oder Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU basieren üblicherweise zumindest überwiegend auf difunktionellen gegenüber Isocyanaten reaktiven Substanzen, d.h. die mittlere Funktionalität der Komponente (d) beträgt vorzugsweise 1,8 bis 2,6, besonders bevorzugt 1,9 bis 2,2. Die TPU sind somit vorwiegend unverzweigt, d.h. überwiegend nicht vemetzt, aufgebaut.
   Vorzugsweise verwendet werden Polyetherole auf der Basis von Propylenoxid-1,2 und Ethylenoxid, in denen mehr als 50 %, vorzugsweise 60 bis 100 % der OH-Gruppen primäre Hydroxylgruppen sind und bei denen zumindest ein Teil des Ethylenoxids als endständiger Block angeordnet ist und insbesondere Polyoxytetramethylen-glykole (Polytetrahydrofuran).
   Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.
   Geeignete Polyesterole können beispielsweise aus üblichen Dicarbonsäuren mit 2 bis 12 Kohlenstoffatomen, vorzugsweise 4 bis 8 Kohlenstoffatomen, beispielsweise Bernsteinsäure, Glutarsäure, Korksäure, Azelainsäure, Sebacinsäure, Adipinsäure, Phthalsäure, Isophthalsäure und/oder Terephthalsäure und bekarinten mehrwertigen Alkoholen, beispielsweise Ethandiol, Propandiol-1,3, Butandiol-1,4, Pentandiol-1,5, Hexandiol-1,6, Decandiol-1,10, 2,2-Dimethylpropandiol-1,3, Propandiol-1,2, Diethylenglykol und/oder Dipropylenglykol hergestellt werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω -Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiolneopentylglykol-polyadipate, Polycaprolactone und insbesondere 1,6-Hexandiol-1,4-butandiol-polyadipate.
   Die Polyesterole besitzen vorzugsweise Molekulargewichte (Gewichtsmittel) von 500 bis 6000, besonders bevorzugt von 800 bis 3500.
c) Als Kettenverlängerungsmittel (c), die üblicherweise Molekulargewichte von 60 bis 499, vorzugsweise 60 bis 300 aufweisen, kommen vorzugsweise Alkandiole mit 2 bis 12 Kohlenstoffatomen, vorzugsweise mit 2, 4 oder 6 Kohlenstoffatomen, wie z.B. Ethandiol, Hexandiol-1,6, und insbesondere Butandiol-1,4 und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder-butandiol-1,4, Hydroxyalkylenether des Hydrochinons, wie z.B. 1,4-Di-(β-hydroxyethyl)-hydrochinon, (cyclo) aliphatische Diamine, wie z.B. 4,4'-Diaminodicyclohexylmethan, 3,3'-Dimethyl-4,4'-diaminodicyclohexylmethan, 1-Amino-3,3,5-trimethyl-5-aminomethyl-cyclohexan, Ethylendiamin, 1,2-, 1,3-Propylen-diamin, N-Methylpropylendiamin-1,3, N,N'-Dimethylethylendiamin und aromatische Diamine, wie z.B. 2,4- und 2,6-Toluylen-diamin, 3,6-Diethyl-2,4- und -2,6-toluylen-diamin und primäre, ortho-di-, -tri- und/oder -tetraalkylsubstituierte 4,4'-Diamino-diphenylmethane.
   Als Kettenverlängerungsmittel finden vorzugsweise Verwendung Alkandiole mit 2 bis 6 Kohlenstoffatomen im Alkylenrest, insbesondere Butandiol-1,4 und/oder Dialkylenglykole mit 4 bis 8 Kohlenstoffatomen.
   Zur Einstellung der üblichen Härte der TPUs und der Schmelzpunkte der TPUs werden die Aufbaukomponenten (b) und (c) üblicherweise in einem molaren Verhältnis (b) : (c) von 1: 0,8 bis 1:10, bevorzugt 1: 1 bis 1: 6,4 variiert, wobei die Härte und der Schmelzpunkt der TPU mit zunehmendem Gehalt an Diolen ansteigt.
   Bevorzugt werden TPU auf der Basis von:
   4,4'-Diphenylmethandiisocyanat (MDI), und/oder Hexamethylendiisocyanat, (b) Polyoxytetramethylenglykol, Polyetherole auf Basis Propylenoxid-1,2 und Ethylenoxid und/oder Polyesterole auf Basis Alkandiolpolyadipat mit 2 bis 6 Kohlenstoffatomen im Alkylenrest sowie (c) Ethandiyl-1,2, Butandiol-1,4, Ethandiol und/oder Hexandiol-1,6 eingesetzt, wobei das Verhältnis der Iso cyanatgruppen der Komponente (a) zur Summe der gegenüber den Isocyanaten reaktiven Gruppen der Komponenten (b) und (c) bevorzugt 1:0,9 bis 1:1,1 beträgt und (b) und (c) besonders bevorzugt in einem molaren Verhältnis von (b) : (c) von 1: 1 bis 1: 6,4 eingesetzt werden.
   Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Bevorzugt enthält zusätzlich (a) auch die komponente (b) keine aromatischen Strukturen, besonders bevorzugt enthalten die Komponenten (a) bis (e) der TPU keine aromatischen Verbindungen.

Die Herstellung der TPUs aus beispielsweise den beschriebenen Ausgangskomponenten ist allgemein bekannt und vielfach beschrieben. Z.B. kann das Reaktionsgemisch enthaltend (a), (b) und gegebenenfalls (c), (d) und/oder (e) nach den bekannten oneshot- oder nach dem Prepolymerverfahren umgesetzt werden, beispielsweise in einem Reaktionsextruder und/oder auf einer üblichen Bandanlage. Die derart hergestellten TPUs können anschließend pelletiert oder granuliert werden und mit der Komponente B zu den erfindungsgemäßen, bevorzugt homogenen Mischungen verarbeitet werden.

Bevorzugt können die TPUs A bzw. Mischungen enthaltend A und B derart hergestellt werden, dass man die thermoplastischen Polyurethane durch Umsetzung von (a) Isocyanaten mit (b) gegenüber Isocyanaten reaktiven und gegebenenfalls (c) Kettenverlängerungsmitteln in Gegenwart von gegebenenfalls (d) Katalysatoren und/oder (e) Hilfs- und/oder Zusatzstoffen in Gegenwart von B1, B2 oder B gemäß Anspruch 1 herstellt, und gegebenenfalls anschließend (wenn man die Umsetzung in Gegenwart von B1 oder B2 und nicht der Komponente B, die B1 und B2 enthält, durchführt) die während der Umsetzung fehlende Komponente B1 oder B2 zu dem Umsetzungsprodukt zumischt. Die Herstellung von A in Gegenwart von B1, B2 oder B kann bevorzugt in einem Reaktionextruder unter üblichen Bedingungen erfolgen. Beispielsweise kann B1, B2 oder B in den Trichter des Reaktionsextruders eingefüllt werden und gleichzeitig und/oder an späterer Stelle des Extruders die Ausgangsstoffe zur Herstellung von A getrennt oder einzeln, bevorzugt intensiv vermischt, zugegeben werden.

Derartig erhältliche Mischungen weisen ebenfalls deutlich verbesserte Eigenschaften auf.

Zu den Ausgangsstoffen und Herstellverfahren der Komponente B kann beispielhaft folgendes ausgeführt werden.

Als Monomere B111 für die Herstellung der Acrylsäureester-Polymerisate B11 kommen vorzugsweise Acrylsäurealkylester mit üblicherweise 1 bis 8 Kohlenstoffatomen, beispielsweise Methylacrylat, Ethylacrylat, Propylacrylat, Methylmethacrylat, Ethylmethacrylat, besonders bevorzugt mit 4 bis 8 Kohlenstoffatomen im Alkylrest, insbesondere Acrylsäure-n-butylester, und/oder Acrylsäureethylhexylester in Betracht. Die Acrylsäureester können bei der Herstellung der Pfropfgrundlage B11 einzeln oder in Mischung eingesetzt werden.

Als mindestens bifunktionelle, bevorzugt 2-3funktionelle Vernetzer B112 eignen sich beispielsweise Monomere, die zwei oder mehr zur Copolymerisation befähigte ethylenische Doppelbindungen enthalten, die nicht in 1,3-Stellung konjugiert sind.

Geeignete Vemetzungsmonomere sind beispielsweise Divinylbenzol, Diallylmaleat, Diallylfumarat und/oder Diallylphthalat, bevorzugt der Acrylsäureester des Tricyclodecenylalkohols und/oder Tricyclopentadienylacrylat sowie Allyl(meth)acrylat.

Als mögliche weitere, copolymerisierbare Monomere B113 können beispielsweise folgende Verbindungen Verwendung finden: Styrol, alpha-Methylstyrol, Acrylnitril, Methacrylnitril, Phenylmaleinimid, Acrylamid und/oder Vinylmethylether.

Zur Herstellung der auf die Pfropfgrundlage B11 gepfropften Hülle B12 eignen sich als vinylaromatische Monomere B121, bevorzugt Styrol und/oder Styrolderivate, z.B. Styrol, Alkytstyrole, bevorzugt α-Methylstyrol, und kernalkylierte Styrole, wie z.B. p-Methylstyrol und/oder tert.-Butylstyrol.

Beispiel für polare, copolymerisierbare ungesättigte Monomere B122 sind Acrylnitril und/oder Methacrylnitril.

Als mögliche weitere, copolymerisierbare Monomere B123 können beispielsweise folgende Verbindungen Verwendung finden: Acrylsäure, Methacrylsäure, Maleinsäureanhydrid, Methylacrylat, Ethylacrylat, Propylacrylat, Methylmethacrylat, Ethylmethacrylat, Phenylmaleinimid, Acrylamid und/oder Vinylmethylether.

Des weiteren können bei der Herstellung von B1, B11 und/oder B12 übliche Hilfs-und/oder Zusatzstoffe Verwendung finden, beispielsweise Emulgatoren, wie Alkalisaize von Alkyl- oder alkylarylsulfonsäuren, Alkylsulfate, Fettalkoholsulfonate, Salze höherer Fettsäuren mit 10 bis 30 Kohlenstoffatomen oder Harzseifen, Polymerisationsinitiatoren wie z.B. übliche Persulfate, beispielsweise Kaliumpersulfat oder bekannte RedoxSysteme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres α-Methylstyrol, wobei die Molekulargewichtsregler üblicherweise in einer Menge von 0 bis 3 Gew.-%, bezogen auf das Gewicht der Reaktionsmischung, eingesetzt werden.

Die Herstellung von ASA-Werkstoffen ist allgemein aus der Fachliteratur bekannt und beispielhaft in DE-A 12 60 135, Seite 3 bis 4, Zeilen 13 bis 23 und US 3 055 859, Seite 2 bis 4, Zeilen 62 bis 10 sowie für die Pfropfung in zwei Stufen in DE-A 31 49 358, Seite 6 bis 8, Zeilen 16 bis 5 und DE-A 32 27 555, Seite 6 bis 8, Zeilen 16 bis 5 beschrieben. Dabei kann zur Herstellung der erfindungsgemäßen ASA-Werkstoffen zunächst das als Pfropfgrundlage B11 dienende kautschukartige Acrylsäureester-Polymerisat z.B. durch Emulsionspolymerisation von B111 hergestellt werden, indem man beispielsweise B111 und den mindestens bifunktionellen Vemetzer B112 sowie gegebenenfalls B113 in beispielsweise wässriger Emulsion in an sich bekannter Weise bei Temperaturen zwischen 20 und 100 °C, vorzugsweise zwischen 50 und 80 °C polymerisiert. Auf diesen dabei entstehenden Polyacrylsäureester-Latex kann ein Gemisch von vinylaromatischen Monomeren B121 mit einem polaren, copolymerisierbaren ungesättigten Monomeren B122 sowie gegebenenfalls B123 aufgepfropft werden, wobei die Pfropfmischpolymerisation ebenfalls vorzugsweise in wäßriger Emulsion durchgeführt wird.

Die kautschukelastische Komponente B11 kann auch, wie in EP-B 534 212, Seite 4 bis 5, Zeilen 46 bis 43 beschrieben, auf einen harten, gegebenenfalls mit den unter B12 genannten Monomeren vernetzten Kern, der aus den für B12 genannten Monomeren aufgebaut ist, aufgepfropft werden.

Vorzugsweise handelt es sich dabei um einen harten Kern mit einer Glasübergängstemperatur Tg > 25°C, wobei der Anteil des Kerns B12 wie bereits dargestellt 5 bis 50 Gew.-%, bezogen auf das Gewicht von B1 beträgt.

In einer weiteren besonders bevorzugten Ausführungsform kann die Pfropfung gemäß DE-A 31 49 358, Seite 6 bis 8, Zeilen 16 bis 5 bzw. DE-A 32 27 555, Seite 6 bis 8, Zeilen 16 bis 5 in zwei Stufen erfolgen, wobei zuerst das vinylaromatische Monomer B121 in Gegenwart der Pfropfgrundlage B11 polymerisiert werden kann. In der zweiten Stufe kann dann die Pfropfmischpolymerisation mit einem Gemisch enthaltend mindestens ein vinylaromatische Monomer B121 und mindestens polares, copolymerisierbares Monomer B122 sowie gegebenenfalls B123 durchgeführt werden. Die eingesetzten und in den ASA-Werkstoffen enthaltenen Mengen der verschiedenen Komponenten sind bereits eingangs beschrieben wurden.

Zur Erzielung der ASA-Werkstoffen mit guten mechanischen Eigenschaften ist der als Pfropfgrundlage dienende Polyacrylsäureester vemetzt, d.h. seine Herstellung durch Polymerisation von Acrylsäureestern erfolgt in Gegenwart von mindestens bifunktionellen, vernetzend wirkenden Monomeren B112.

Die Teilchengröße der Pfropfgrundlage B11 beträgt bevorzugt zwischen 0,04 und 10 µm, besonders bevorzugt zwischen 0,05 und 2 µm, insbesondere zwischen 0,07 und 1 µm. Die Teilchengröße der Pfropfkautschuke B1 liegt bevorzugt zwischen 0,05 und 15 µm, besonders bevorzugt zwischen 0,06 und 5 µm, insbesondere zwischen 0,08 und 1,2 µm.

Die in den erfindungsgemäßen Mischungen zusätzlich enthaltene Komponente B2, die als Hartmatrix betrachtet werden kann, basiert erfindungsgemäß auf den Komponenten B21, B22 und gegebenenfalls B23.

Als Komponente B 21 können beispielsweise folgende Monomere verwendet werden: allgemein bekannte vinylaromatische Monomere, bevorzugt Styrol und/oder Styrolderivate, z.B. Styrol, Alkylstyrole, bevorzugt α-Methylstyrol, und kernalkylierte Styrole, wie z.B. p-Methylstyrol und/oder tert.-Butylstyrol.

Beispielsweise folgende Monomere können als Komponente B 22 eingesetzt werden: allgemein für diesen Zweck bakannte polare, copolymerisierbare ungesättigte Monomere, z.B. Acrylnitril, Methacrylnitril, Acrylsäure, Methacrylsäure, (Meth)acrylsäurealkylester mit 1 bis 4 Kohlenstoffatomen im Alkylrest, beispielsweise Methylacrylat, Ethylacrylat, Propylacrylat, Methylmethacrylat und/oder Ethylmethacrylat, Maleinsäureanhydrid, Phenylmaleinimid, Acrylamid und/oder Vinylmethylether, bevorzugt Acrylnitril und/oder Methacrylnitril.

Als gegebenenfalls zusätzlich in B 2 enthaltene Komponente B 23 können z.B. Monomere Verwendung finden, die allgemein für diesen Zweck bekannt sind, beispielsweise Ethylhexylacrylat, Stearylycrylat und/oder Alkylacrylamide.

Die Herstellung von B2 kann nach allgemein bekannten Methoden, wie sie z.B. in DE-A 31 49 358, Seite 9, Zeilen 18 bis 32 und DE-A 32 27 555, Seite 9, Zeilen 18 bis 32 beschrieben sind, durchgeführt werden, beispielsweise durch allgemein bekannte Copolymerisation von B21, B22 und gegebenenfalls B23 in Masse, Lösung, Suspension oder wässriger Emulsion bei üblichen Temperaturen und Drücken in bekannten Apparaturen, die beispielsweise im Kunstsoff-Handbuch, Vieweg-Daumiller, Band V (Polystyrol), Carl-Hanser-Verlag, München 1969, S. 124, Z. 12 ff. beschrieben sind.

Die in den erfindungsgemäßen Mischungen enthaltenen Komponenten B1 und B2 können vor der Mischung mit dem thermoplastischen Polyurethan A intensiv vermischt werden. Bevorzugt werden die Komponenten in dafür geeigneten Aggregaten (Extruder, Kneter, Spritzgußmaschine, Presse, Kalander etc) bei erhöhten Temperaturen, bevorzugt 170 bis 250, insbesondere 180 bis 230 °C, gemischt.

Die erfindungsgemäßen Karosserieteile und/oder das Holz können bevorzugt zusätzlich zu (A) und (B) Hilfs- und/oder Zusatzstoffe enthalten. Besonders bevorzugt sind erfindungsgemäß Mischungen (1) enthaltend 50 Gew.-% bis 99,9 Gew.-%, insbesondere 50 Gew.-% bis 99 Gew.-% A und B und 0,1 Gew.-% bis 50 Gew.-%, insbesondere 1 Gew.-% bis 50 Gew.-% Zusatzstoffe, die Gewichtsangaben jeweils bezogen auf das Gesamtgewicht der Mischung (1), d.h. insbesondere bezogen auf die summe der Gewichte von A, B und Zusatzstoffen in der Mischung (1). Als Zusatzstoffe können beispielsweise Weichmacher, Antistatika, Lichtschutzmittel, Gleitmittel, Treibmittel, Haftvermittler, weitere verträgliche Thermoplastische Kunststoffe, beispielsweise Polyester (z.B. Polyethylenterephthalat, Polybutylenterephthalat), Polycarbonat, Polyamid, Polyoxymethylen, Polystyrol, Polyethylen, Polypropylen, Polyvinylchlorid, Füllstoffe, oberflächenaktive Substanzen, Flammschutzmittel, Farbstoffe und Pigmente, Stabilisatoren gegen Oxidation, Hydrolyse, Licht, Hitze oder Verfärbung und/oder Verstärkungsmittel enthalten sein. Diese Zusatzstoffe können sowohl bereits bei der Herstellung der TPU, wie bereits beschrieben, eingesetzt werden, als auch der Komponente (A) und/oder (B) bei der Herstellung der Mischung zugesetzt werden.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, Polyethylen-Wachse, Polypropylen-Wachse, Fettalkohole mit 6 bis 20 Kohlenstoffatomen, Ketone, Carbonsäuren wie Fettsäuren, Montansäure oder oxidiertes PolyethylenWachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der b-(3,5-di-tertierbutyl-4-hydroxyphenyl-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityltetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden.

Bei der Mischung der Komponenten (A) und (B) liegen diese bevorzugt in einem fließfähigen, erweichten oder geschmolzenen Zustand vor. Das homogene Vermischen der Komponenten erfolgt bevorzugt bei Temperaturen, die über den Schmelztemperaturen von (A) und (B) liegen. Üblicherweise beträgt die Temperatur, bei der die Vermischung der Komponenten erfolgt, 160 bis 250 °C, vorzugsweise 190 bis 240 °C, besonders bevorzugt 200 bis 235 °C. Das Vermischen der Komponenten zu einem homogenen Produkt kann mit üblichen Geräten, die Einrichtungen zum Heizen und Rühren, Kneten oder Walzen aufweisen, kontinuierlich oder diskontinuierlich bevorzugt mit Entgasung durchgeführt werden. Bevorzugt erfolgt das Vermischen der Komponenten (A) und (B) in einem üblichen Extruder, wobei die Komponenten A und B gemischt oder einzeln beispielsweise vollständig über den Trichter in den Extruder eingeführt oder auch anteilig an späterer Stelle des Extruders zum geschmolzenen oder festen, im Extruder befindlichen Produkt eingeführt werden können.

Vorzugsweise werden die Komponenten, und insbesondere das TPU, vor Verarbeitung getrocknet. In einem besonders bevorzugten Verfahren werden die Komponenten B1 und B2 separat vorgemischt (bevorzugt im Extruder) und der so hergestellte "Compound" anschließend mit Komponente A unter o.g. Bedingungen gemischt.

Die schmelzgemischten Komponenten werden bevorzugt anschließend abgekühlt und gleichzeitig oder auch nach der gegebenenfalls erst teilweise erfolgten Abkühlung zerkleinert und insbesondere granuliert. Die so erhaltenen Produkte dienen der weiteren Verarbeitung durch Spritzguss, Extrusion, Kalandrierung, Pressen, Blasen etc., insbesondere durch Extrusion zu Folien.

Diese Vorteile sollen anhand der folgenden Beispiele dargestellt werden.

### Beispiele:

In den Beispielen wurden die in der Tabelle 1 angegebenen Ausgangskomponenten mittels eines üblichen Zweiwellenextruders bei einer Schmelztemperatur von ca. 210 °C zu den Mischungen verarbeitet. Mit den Mischungen gemäß Vergleichsbeispiel 1 und Beispiel 1 wurden Folien mit einer Dicke von 0,250 mm hergestellt durch Extrusion mit einem Einwellenextruder, 30 D, Schmelztemperatur 190-240 °C und ansonsten üblichen Bedingungen.

**Tabelle 1:**

| | Mischung Vergleichsbeispiel 1 | Mischung Beispiel 1 |
|---|---|---|
| ASA [Gew.-%] | 100 | 85 |
| TPU [Gew.-%] | - | 15 |
| | | |
| Reißdehnung nach DIN EN ISO 527 (12) | 4% | 65 % |

| | | |
|---|---|---|
| ASA: Luran® S 797 SE (ASA der BASF Aktiengesellschaft) TPU: TPU auf der Basis von aliphatischem Isocyanat | | |

In der Tabelle 2 sind die Eigenschaften der hergestellten Folien dargestellt Die mechanischen Messungen erfolgten nach ISO 527/3 und xenon 1200 ISO 4892/2.

**Tabelle 2: mechanische Eigenschaften**

| Vergleichsbeispiel 1 | | | | | |
|---|---|---|---|---|---|
| | | | | | |

| Entnahmetermin | σ | σ | ε | ε | Zug-E-Modul |
|---|---|---|---|---|---|
| 0 h | 34,1 | 27,8 | 2,9 | 12,9 | 1698 |
| 500 h | 34 | 28,4 | 2,7 | 7,4 | 1697 |
| 1000 h | 34,5 | 28,4 | 2,5 | 5,48 | 1751 |
| | | | | | |
| Beispiel 1 | | | | | |

| Entnahmetermin | σ | σ | ε | ε | Zug-E-Modul |
|---|---|---|---|---|---|
| 0 h | 24,6 | 21,9 | 3,5 | 52,9 | 1278 |
| 500 h | 24,6 | 21,4 | 3,4 | 44,1 | 1173 |
| 1000 h | - | 21,6 | - | 26,14 | 1308 |
| | | | | | |

Anhand des Vergleichs der Beispiele wird deutlich, dass erfindungsgemäß die Reißdehnung/Bruchdehnung auf einen Wert von größer 20 % deutlich verbessert werden konnte, auch nach künstlicher Bewitterung.

Die Farbmessungen wurden gemäß DIN 6174 und Xenon 1200 ISO 4892/2 durchgeführt.

**Tabelle 3: Farbeigenschaften**

| Vergleichsbeispiel 1 | | | | | | |
|---|---|---|---|---|---|---|
| Entnahmetermine | Gelbwert | Glanz | DE | DL | DA | DB |
| 0 Stunden | 5,7 | 7,0 | 0,0 | 0,0 | 0,0 | 0,0 |
| 500 Stunden | 2,6 | 6,5 | 1,7 | 0,5 | 0,1 | -1,6 |
| 1000 Stunden | 2,8 | | 1,7 | 0,8 | 0,0 | -1,5 |

| Beispiel 1 | | | | | | |
|---|---|---|---|---|---|---|
| Entnahmetermine | Gelbwert | Glanz | DE | DL | DA | DB |
| 0 Stunden | 8,4 | 5,9 | 0,0 | 0,0 | 0,0 | 0,0 |
| 500 Stunden | 4,7 | 5,7 | 2,1 | 0,5 | 0,1 | -2,0 |
| 1000 Stunden | 4,6 | | 2,3 | 1,0 | 0,1 | -2,1 |

Ein wichtiger Parameter, der die Stabilität bei Bewitterung beschreibt, ist die total colour deviation, in der Tabelle 3 mit DE angegeben. Diese ist auch nach 1000 Stunden deutlich unter 4.

## Patentansprüche

1. Karosserieteile und/oder Holz beschichtet mit einer Mischung (1) enthaltend (A) thermoplastisches Polyurethan basierend auf aliphatischem Isocyanat und (B) Acrylnitril-Styrol-Acrylester-Copolymer (ASA), wobei das Acrylnitril-Styrol-Acrylester-Copolymer (B) basiert auf
(B1) 10 bis 90 Gew.-% mindestens einem Propfkautschuk basierend auf
(B11) 50 bis 95 Gew.-% einer Propfgrundlage hergestellt mit
(B111) 70 bis 99,9 Gew.-% mindestens einem Acrylsäurealkylester
(B112) 0,1 bis 30 Gew.-% mindestens einem mindestens bifunktionellen Vernetzer,
(B113) 0 bis 29,9 Gew.-% mindestens einem weiteren copolymerisierbaren Monomeren,
(B12) 5 bis 50 Gew.-% einer Propfhülle auf der Basis von
(B121) 65 bis 90 Gew.-%, bevorzugt 70 bis 80 Gew.-% mindestens einem vinylaromatischen Monomeren,
(B122) 10 bis 35 Gew.-%, bevorzugt 20 bis 30 Gew.-% mindestens einem polaren, copolymerisierbaren ungesättigten Monomeren, bevorzugt Acrylnitril und/oder Methacrylnitril.
(8123) 0 bis 25 Gew.-% mindestens einem weiteren copolymerisierbaren Comonomer,
(B2) 10 bis 90 Gew.-% mindestens einem Copolymeren hergestellt mit den Komponenten
(B21) 60 bis 85 Gew.-% mindestens einem vinylaromatischen Monomeren.
(B22) 15 bis 40 Gew.-% mindestens einem polaren, copolymerisierbaren ungesättigten Monomeren,
(B23) 0 bis 9 Gew.-% mindestens einem Comonomeren,
wobei sich die Gewichtsangaben zu (B1) und (B2) auf das Gewicht von (B), die Gewichtsangaben zu (B11 und B12) auf das Gewicht von (B1), die Gewichtsangaben zu (B111), (B112) und (B113) auf das Gewicht der Komponente (B11), (B121), (B122) und (B123) auf das Gewicht von (B12) und die Gewichtsangaben von (B21), (B22) und (B23) auf das Gewicht von (B2) bezogen sind.

2. Karosserieteile und/oder Holz gemäß Anspruch 1, **dadurch gekennzeichnet, dass** die Mischung (1) zwischen 1 Gew.-% und 40 Gew.-% (A) und zwischen 60 Gew.-% und 99 Gew.-% (B), jeweils bezogen auf das Gesamtgewicht der Mischung (1), enthält.

3. Karosserieteile und/oder Holz gemäß Anspruch 1, **dadurch gekennzeichnet, dass** das thermoplastische Polyurethan basiert auf Hexamethylendiisocyanat als Isocyanat (a).

4. Karosserieteile und/oder Holz gemäß Anspruch 1, **dadurch gekennzeichnet, dass** die Mischung (1) zusätzlich zu (A) und (B) 1 Gew.-% bis 50 Gew.-% Zusatzstoffe enthält, bezogen auf das Gesamtgewicht der Mischung (1).

5. Karosserieteile gemäß einem der Ansprüche 1 bis 4, **dadurch gekennzeichnet, dass** das Karosserieteil einen Träger auf der Basis von Kunststoff aufweist, der mit einer Folie enthaltend die Mischung (1) beschichtet ist.

6. Möbel beschichtet mit einer Mischung (1) gemäß einem der Ansprüche 1 bis 4.

7. Verfahren zur Herstellung von Karosserieteile und/oder Holz beschichtet mit einer Mischung (1) gemäß einem der Ansprüche 1 bis 4, **dadurch gekennzeichnet, dass** man die Mischung zu einer Folie extrudiert und die Folie mittels Tiefziehverfahren, Sinterverfahren, laminieren und/oder Vakuumformen auf der zu beschichtenden Oberfläche appliziert.

## Claims

1. A bodywork part and/or a wood coated with a mixture (1) comprising (A) thermoplastic polyurethane based on aliphatic isocyanate and (B) acrylonitrile-styrene-acrylate copolymer (ASA), wherein the acrylonitrile-styrene-acrylate copolymer (B) is based on
(B1) from 10 to 90% by weight of at least one graft rubber based on
(B11) from 50 to 95% by weight of a graft base prepared using
(B111) from 70 to 99.9% by weight of at least one alkyl acrylate
(B112) from 0.1 to 30% by weight of at least one at least bifunctional crosslinking agent,
(B113) from 0 to 29.9% by weight of at least one other copolymerizable monomer,
(B12) from 5 to 50% by weight of a graft shell based on
(B121) from 65 to 90% by weight, preferably from 70 to 80% by weight, of at least one vinylaromatic monomer,
(B122) from 10 to 35% by weight, preferably from 20 to 30% by weight, of at least one polar, copolymerizable unsaturated monomer, preferably acrylonitrile and/or methacrylonitrile,
(B123) from 0 to 25% by weight of at least one other copolymerizable comonomer,
(B2) from 10 to 90% by weight of at least one copolymer prepared using the following components:
(B21) from 60 to 85% by weight of at least one vinylaromatic monomer,
(B22) from 15 to 40% by weight of at least one polar, copolymerizable unsaturated monomer,
(B23) from 0 to 9% by weight of at least one comonomer,
where the weight data for (B1) and (B2) are based on the weight of (B), the weight data for (B11) and (B12) are based on the weight of (B1), the weight data for (B111), (B112), and (B113) are based on the weight of component (B11), (B121), (B122), and (B123) are based on the weight of (B12), and the weight data for (B21), (B22), and (B23) are based on the weight of (B2).

2. The bodywork part and/or the wood according to claim 1, wherein the mixture (1) comprises from 1 to 40% by weight of (A) and from 60 to 99% by weight of (B), based in each case on the total weight of the mixture (1).

3. The bodywork part and/or the wood according to claim 1, wherein the thermoplastic polyurethane is based on hexamethylene diisocyanate as isocyanate (a).

4. The bodywork part and/or the wood according to claim 1, wherein the mixture (1) comprises, in addition to (A) and (B), from 1 to 50% by weight of additives, based on the total weight of the mixture (1) .

5. The bodywork part according to any of claims 1 to 4, which has a support based on plastic and coated with a foil comprising the mixture (1).

6. An item of furniture coated with a mixture (1) according to any of claims 1 to 4.

7. A process for producing bodywork parts and/or wood coated with a mixture (1) according to any of claims 1 to 4, which comprises extruding the mixture to give a foil, and using thermoforming processes, sintering processes, lamination, and/or vacuum forming to apply the foil to the surface to be coated.

## Revendications

1. Pièces de carrosserie et/ou bois revêtus avec un mélange (1) contenant (A) un polyuréthane thermoplastique à base d'un isocyanate aliphatique et (B) un copolymère acrylonitrile-styrène-ester acrylique (ASA), le copolymère acrylonitrile-styrène-ester acrylique (B) étant à base de
(B1) 10 à 90 % en poids d'au moins un caoutchouc greffé à base de
(B11) 50 à 95 % en poids d'une base de greffage fabriquée avec
(B111) 70 à 99,9 % en poids d'au moins un ester alkylique de l'acide acrylique,
(B112) 0,1 à 30 % en poids d'au moins un agent de réticulation au moins bifonctionnel,
(B113) 0 à 29,9 % % en poids d'au moins un monomère copolymérisable supplémentaire,
(B12) 5 à 50 % en poids d'une enveloppe de greffage à base de
(B121) 65 à 90 % en poids, de préférence 70 à 80 % en poids, d'au moins un monomère aromatique de vinyle,
(B122) 10 à 35 % en poids, de préférence 20 à 30 % en poids, d'au moins un monomère polaire insaturé copolymérisable, de préférence l'acrylonitrile et/ou le méthacrylonitrile,
(B123) 0 à 25 % en poids d'au moins un comonomère copolymérisable supplémentaire,
(B2) 10 à 90 % en poids d'au moins un copolymère fabriqué avec les composants
(B21) 60 à 85 % en poids d'au moins un monomère aromatique de vinyle,
(B22) 15 à 40 % en poids d'au moins un monomère polaire insaturé copolymérisable,
(B23) 0 à 9 % en poids d'au moins un comonomère,
les données en poids relatives à (B1) et (B2) se rapportant au poids de (B), les données en poids relatives à (B11) et (B12) se rapportant au poids de (B1), les données en poids relatives à (B111), (B112) et (B113) se rapportant au poids du composant (B11), (B121), (B122) et (B123) au poids de (B12) et les données en poids relatives à (B21), (B22) et (B23) se rapportant au poids de (B2).

2. Pièces de carrosserie et/ou bois selon la revendication 1, **caractérisés en ce que** le mélange (1) contient entre 1 % en poids et 40 % en poids de (A) et entre 60 % en poids et 99 % en poids de (B), à chaque fois par rapport au poids total du mélange (1).

3. Pièces de carrosserie et/ou bois selon la revendication 1, **caractérisés en ce que** le polyuréthane thermoplastique est à base de diisocyanate d'hexaméthylène en tant qu'isocyanate (a).

4. Pièces de carrosserie et/ou bois selon la revendication 1, **caractérisés en ce que** le mélange (1) contient en plus de (A) et (B) 1 % en poids à 50 % en poids d'additifs, par rapport au poids total du mélange (1).

5. Pièces de carrosserie selon l'une quelconque des revendications 1 à 4, **caractérisées en ce que** la pièce de carrosserie comprend un support à base de plastique qui est revêtu avec une feuille contenant le mélange (1).

6. Meuble revêtu avec un mélange (1) selon l'une quelconque des revendications 1 à 4.

7. Procédé de fabrication de pièces de carrosserie et/ou de bois revêtus avec un mélange (1) selon l'une quelconque des revendications 1 à 4, **caractérisé en ce que** le mélange est extrudé en une feuille et la feuille est appliquée sur la surface à revêtir par un procédé de formage profond, un procédé de frittage, stratification et/ou formage sous vide.
